# EUROPÄISCHE PATENTANMELDUNG

(11) **EP 4 691 227 A1**
(43) Veröffentlichungstag der Anmeldung: **11.02.2026**
(21) Anmeldenummer: 25194081.3
(22) Anmeldetag: 05.08.2025
(51) Int. Cl.: A01K 1/01, A01K 31/04

(54) **KOTFÖRDERVORRICHTUNG, INSBESONDERE FÜR DEN EINSATZ BEI LEGEHENNENBODENHALTUNG ODER HÄHNCHENMAST**

(30) Priorität: 08.08.2024 DE 102024122657
(71) Anmelder: Noltewerk GmbH & Co. KG, 48268 Greven (DE)
(72) Erfinder: van Üüm, Christoph, 48712 Gescher (DE)
(74) Vertreter: Lenzing Gerber Stute

(57) **Zusammenfassung**

Die Erfindung betrifft eine Kotfördervorrichtung (1) mit einem Fördermittel (3) aufweisend ein Förderband zur Aufnahme von Kot und wenigstens einem Antrieb (2), der dazu eingerichtet ist, das Fördermittel (3) zu bewegen, wobei ein Ende des Fördermittels (3) fest mit einer rotatorisch antreibbaren Antriebstrommel (14) verbunden ist, wobei die Kotfördervorrichtung (1) eingerichtet ist, auf der Oberseite des Förderbandes (3) befindlichen Kot beim Aufwickeln des Fördermittels (3) auf die Antriebstrommel abzutragen.

## Beschreibung

Die vorliegende Erfindung betrifft eine Kotfördervorrichtung, eine Verwendung einer Kotfördervorrichtung bei Tierhaltung, insbesondere bei Legehennenbodenhaltung oder Hähnchenmast, sowie ein Verfahren zum Fördern von Kot.

Es ist bekannt, Kotfördervorrichtungen zum voll mechanischen Abtransport des Kotes von Legehennen aus dem Stall einzusetzen.

In der Gebrauchsmusterschrift DE 20 2008 012 721 U ist ein Kotförderband offenbart, das sich unterhalb der für die Tiere begehbaren Bodenaufstandsfläche befindet. Die Bodenaufstandsfläche ist aus einem kotdurchlässigen Gitter ausgearbeitet und der Kot fällt durch das Gitter auf das Förderband. Das Förderband läuft zwischen den in Etagen angeordneten Käfigen. Der Kot wird regelmäßig abgemistet und über am Ende des Stalles angeordnete Querförderbänder in zentrale Lagerhallen abtransportiert, wo er dann zwischengelagert wird. Das Förderband ist umlaufend ausgebildet.

Bei der Bodenhaltung von Legehennen wird die Bodenfläche als Scharraum eingerichtet und den Legehennen werden zwischen den parallel verlaufenden Stallgängen Volieren mit Legenester angeboten, die an übereinander oder versetzt angebrachte Sitzstangen und/oder Ebenen angebracht sein können. Die Legehennen können in den Stallgängen und unter den Volieren laufen und scharren. In dem Scharrraum, auch nutzbare Stallgrundfläche genannt, liegt auf dem Boden Streugut, auf dem die Tiere freilaufen und scharren können. Der Stallgang dient dem Durchqueren des Stalls und wird sowohl von den Tieren, ggf. aber auch von Personal benutzt.

Es ist Aufgabe der vorliegenden Erfindung eine Kotfördervorrichtung anzugeben, die das Abmisten der Bodenfläche unterstützt.

Die Aufgabe wird gelöst von einer Kotfördervorrichtung mit den Merkmalen des Oberbegriffs des Anspruchs 1, einer Verwendung einer Kotfördervorrichtung zum Abmisten, einem Stall mit wenigstens einer Kotfördervorrichtung sowie von einem Verfahren zum Fördern von Kot mit den Merkmalen des Anspruchs 12.

Demnach ist eine Kotfördervorrichtung mit einem Fördermittel aufweisend ein Förderband zur Aufnahme von Kot und wenigstens einem Antrieb, der dazu eingerichtet ist, das Fördermittel zu bewegen, vorgesehen, wobei ein Ende des Fördermittels fest mit einer rotatorisch antreibbaren Antriebstrommel verbunden ist, und wobei die Kotfördervorrichtung eingerichtet ist, auf dem Förderband befindlichen Kot beim Aufwickeln des Fördermittels auf die Antriebstrommel abzutragen.

Die Kotfördervorrichtung erlaubt es, einen Stall mit dem Förderband der Länge nach auszulegen, Kot auf dem Förderband auf einer großen Fläche zu sammeln und bei Bedarf den Kot durch Aufwickeln des Fördermittels abzutransportieren.

Das Förderband definiert eine Förderfläche zur Förderung des Kotes und wird auch Fördergurt genannt.

Das Förderband hat bevorzugt eine konstante Breite und ist vollflächig ausgebildet.

Vorzugsweise ist das Förderband zumindest teilweise aus Kunststoff gebildet, insbesondere aus PVC, da Kot einfach abzustreifen ist. Alternativ kann auch PU, Silikon, PE oder Gummi eingesetzt werden. Das Förderband weist zur Erhöhung der Stabilität bevorzugt wenigstens eine Gewebelage auf. Vorzugsweise ist die Transportseite durch den Kunststoff gebildet. Die Laufseite kann mit Kunststoff beschichtet sein, um Geräusche zu reduzieren. Es ist aber auch denkbar, die Gewebelage laufseitig anzuordnen, da dies bei Feuchtigkeit vorteilhaft ist, da keine Adhäsion auftritt. Das Förderband kann auch aus Polyamidgewebe bestehen.

Das Förderband weist eine (bevorzugt durchgehende) Länge von 50 m bis 310 m, insbesondere 80 m bis 150 m auf und/oder eine Breite von 0,5 m bis 30 m, insbesondere 0,5 m bis 2 m oder 10 m bis 30 m. Das Förderband deckt die Bodenfläche des Stalls im vollständig ausgelegten Zustand großflächig ab.

In einer Ausführungsform ist ein zweites Ende des Fördermittels fest mit einer rotatorisch antreibbaren zweiten Antriebstrommel verbunden, wobei die Kotfördervorrichtung weiterhin eine Umlenkeinrichtung umfasst, um die das Fördermittel umläuft. Dabei ist es vorteilhaft, wenn ein einziger Antrieb vorhanden ist, der wahlweise die eine oder andere Antriebstrommel antreibt.

Weiterhin kann die Kotfördervorrichtung eine Abstreifvorrichtung umfassen, die dazu eingerichtet ist, auf der Oberseite des Förderbandes befindlichen Kot beim Aufwickeln des Fördermittels auf die Antriebstrommel mittels des Antriebs abzustreifen.

Vorzugsweise ist die Abstreifvorrichtung eine v-förmige (und spiegelsymmetrisch) ausgebildete Abstreiferleiste und entgegen der Aufwickelrichtung spitz zulaufend angeordnet. Der Kot lässt sich so besonders gut abstreifen. Die Abstreiferleiste schließt vorzugsweise einen Winkel größer 90° ein.

In einer vorteilhaften Ausführungsform ist wenigstens ein Ende des Förderbandes mit einem Zugmittel verbunden und das Zugmittel mit einer Antriebstrommel fest verbunden. Das Zugmittel kann ein Riemen, Seil, Zahnriemen, eine Kette oder dergleichen sein. Das Zugmittel ist bevorzugt mittels Klemmleiste an einem Ende des Förderbandes befestigt. Es ist vorteilhaft, wenn das Förderband und das Zugmittel so dimensioniert sind, dass das Förderband im vollständig ausgelegten Zustand die Bodenfläche großflächig abdeckt und stets nur das Zugmittel auf der Antriebstrommel angeordnet ist. In anderen Worten liegt das Förderband im vollständig ausgelegten Zustand einfach (einlagig) im Stall. Dadurch kann Material und Gewicht eingespart werden und die Kosten können reduziert werden.

In einer bevorzugten Ausführungsform sind zwei Antriebstrommeln vorhanden, die in unmittelbarer Nähe zueinander liegen, wobei der Abstand zur Umlenkeinrichtung in einem Bereich zwischen 50 m bis 310 m liegt. Vorzugsweise sind an beiden Enden des Förderbandes Zugmittel befestigt, die jeweils auf eine der Antriebstrommeln gegenläufig auf- und abgewickelt werden. Die Länge der Zugmittel und des Förderbandes sind dabei vorzugsweise derart dimensioniert, dass das Förderband stets zwischen den Antriebstrommeln über die Umlenkreinrichtung hin- und herläuft und nicht auf- oder abgewickelt wird. Im vollständig ausgelegten Zustand liegt das Förderband zwischen einer Antriebstrommel und der Umlenkreinrichtung auf der Bodenfläche auf. Ein Zugmittel kann dabei unterhalb des Förderbandes liegen. Es ist aber auch denkbar, die Zugmittel seitlich beabstandet zum Förderband anzuordnen. Zum Abmisten werden die Zugmittel auf- bzw. abgewickelt, derart, dass das Förderband über die Umlenkeinrichtung umläuft, wobei dabei der auf der Tragseite befindliche Kot herunterfällt und das Förderband rückseitig zurückläuft. Im vollständig abgemisteten Zustand liegt ein Zugmittel auf der nun nach oben zeigenden Laufseite und das Förderband liegt umgedreht auf dem Boden. Dieser Zustand kann zur erneuten Aufnahme von Kot genutzt werden.

Es ist besonders vorteilhaft, wenn das Zugmittel eine Breite von weniger als 50% der Förderbandbreite aufweist, insbesondere weniger als 30% und/oder weniger als 300 mm.

Bei der Auswahl des Zugmittels sollte beachtet werden, dass dieses die benötigte Zugfestigkeit aufweist, insbesondere sollte die Zugfestigkeit des Zugmittels im Wesentlich gleich groß sein, wie die des Förderbandes.

In einer Ausführungsform ist ein zweiter Antrieb und eine zweite mittels des zweiten Antriebs rotatorisch antreibbare Antriebstrommel umfasst, wobei das zweite Ende des Förderbandes fest mit der zweiten Antriebstrommel verbunden ist. Das Förderband kann so zwischen den beiden Antriebstrommel hin und her auf- und abgewickelt werden. Dabei kann die zweite Antriebstrommel im Gehäuse der ersten Antriebstrommel untergebracht sein und das Förderband mittels einer Umlenkvorrichtung (am anderen Ende des Stallganges) umgelenkt sein. Das Förderband kann dann automatisch ausgezogen und aufgerollt werden. Der Abstand zwischen den beiden Antriebstrommeln liegt dabei bevorzugt in einem Bereich zwischen 300 mm und 1200 mm. Dabei ist es denkbar, dass das zweite Ende des Förderbandes an der zweiten Antriebstrommel befestigt ist oder an wenigstens einem Zugmittel, der mit der zweiten Antriebstrommel fest verbunden ist. Es ist aber auch denkbar, die zweite Antriebstrommel in einem eigenen Gehäuse unterzubringen und am anderen Ende der Abmiststrecke bzw. des Stalls zu platzieren. Der Abstand zwischen den beiden Antriebstrommeln liegt dann bevorzugt in einem Bereich zwischen 50 m und 150 m. Die beiden Antriebstrommeln sind dabei bevorzugt jeweils an einem Ende eines Stallganges platziert.

In einer anderen Ausführungsform liegt das zweite Ende des Förderbandes frei. Das Abrollen und damit Auslegen des Förderbandes im Stall erfolgt händisch oder mit einer separaten Zugvorrichtung.

Weiterhin ist eine Verwendung einer zuvor beschriebenen Kotfördervorrichtung zum zumindest teilweisen Auslegen einer (Beton-)Bodenfläche zur Tierhaltung, insbesondere Legehennenbodenhaltung oder Hähnchenmast mit dem Förderband und Abmisten der Bodenfläche vorgesehen.

Die Oberseite des Förderbandes bietet im ausgelegten Zustand eine Aufstandsfläche für die Tiere und ist somit als nutzbare Stallgrundfläche zu sehen. Der ausgelegte Zustand wird für mindestens 80%, insbesondere 90% der Wochenzeit eingenommen. Beim Abmisten kann es einen im Wesentlichen konstanten Austrag des Kots über die gesamte Länge des Förderbandes geben, was für die Planung des Abtransportes besonders vorteilhaft ist.

Außerdem ist ein Stall zur Legehennenbodenhaltung mit parallel verlaufenden Stallgängen und dazwischen angeordneten (aufgeständerten) Volieren vorgesehen, wobei die Bodenfläche als Scharrraum für die Legehennen eingerichtet ist und wenigstens eine zuvor beschriebene Kotfördervorrichtung eingesetzt ist. Das ausgelegte Förderband verläuft bevorzugt parallel zu den Stallgängen und liegt in den Stallgängen und/oder unterhalb der Volieren. Die Länge des Förderbandes entspricht bevorzugt der Länge der nutzbaren Stallgrundfläche, insbesondere mindestens 90% der Länge der nutzbaren Stallgrundfläche.

Vorzugsweise weist der Stall quer zu den Stallgängen ein Querförderband auf, wobei die Kotfördereinrichtung dazu eingerichtet ist, beim Abmisten Kot von dem Förderband auf die Transportseite des Querförderbandes abzutragen.

Das Abtragen kann mit einer Abstreifvorrichtung vor dem Antrieb erfolgen oder mittels einer vorhandenen Umlenkvorrichtung, wo der Kot einfach herunterfällt und optional ein Abstreifer das Förderband säubert.

Das Querförderband nimmt vorzugsweise auch den Kot von den Abmisteinrichtungen auf, die in den Volieren angeordnet sind und unterhalb der dort verwendeten Gitter verlaufen.

Das Querförderband kann in einer Grube angeordnet sein.

Das Querförderband liegt bevorzugt in einem für die Tiere unzugänglichen Bereich. Das Querförderband läuft vorzugsweise an einem (dem Eiersammelraum entgegengesetzten) Ende der Stallgänge entlang. Anstelle eines Querförderbandes ist auch die Anordnung eine Grube oder eines Auffangbehälters unterhalb der Abstreifvorrichtung oder der Umlenkvorrichtung denkbar.

Es ist vorteilhaft, wenn auch der Antrieb der Kotfördervorrichtung und/oder die Umlenkvorrichtung außerhalb des für die Tiere zugänglichen Bereichs liegt. Dabei wird das Fördermittel beispielsweise unter einer Gittertür hergeführt.

Weiterhin ist ein Verfahren zum Abmisten von Kot aus einem Stall mit den folgenden Schritten vorgesehen:
- Vorsehen einer Kotfördervorrichtung mit einem Fördermittel aufweisend ein Förderband,
- Auslegen zumindest eines Teils einer Bodenfläche des Stalls mit dem Förderband,
- Sammeln von Kot auf dem Förderband als Aufstandsfläche für in dem Stall gehaltene Tiere und
- Abmisten des Kotes durch Fördern des Kotes mittels des Förderbandes.

Die Kotfördervorrichtung erlaubt es, einen Stall mit dem Förderband der Länge nach auszulegen und Kot auf der Oberfläche des Förderbandes über eine große Fläche zu sammeln und bei Bedarf abzutransportieren.

Das Förderband hat bevorzugt eine konstante Breite und ist vollflächig.

Vorzugsweise ist das Förderband zumindest teilweise aus Kunststoff gebildet, insbesondere aus PVC, da Kot einfach abzustreifen ist. Alternativ kann auch PU, Silikon, PE oder Gummi eingesetzt werden. Das Förderband weist zur Erhöhung der Stabilität bevorzugt wenigstens eine Gewebelage auf. Vorzugsweise ist die Transportseite durch den Kunststoff gebildet. Die Laufseite kann mit Kunststoff beschichtet sein, um Geräusche zu reduzieren. Es ist aber auch denkbar, die Gewebelage laufseitig anzuordnen, da dies bei Feuchtigkeit vorteilhaft ist, da keine Adhäsion auftritt. Das Förderband kann auch aus Polyamidgewebe bestehen.

Das Förderband weist eine (insbesondere durchgehende) Länge von 50 m bis 310 m, insbesondere 80 m bis 150 m auf und/oder eine Breite von 0,5 m bis 30 m, insbesondere 0,5 m bis 2 m (Legehennenhaltung) oder 10 m bis 30 m (Hähnchenmast). Das Förderband deckt die Bodenfläche des Stalls im vollständig ausgelegten Zustand großflächig ab.

Im vollständig ausgelegten Zustand liegt das Förderband bevorzugt einfach (einlagig), wodurch Material eingespart werden kann. Es ist aber auch denkbar, das Förderband umlaufend auszubilden.

Neben dem Einsatz in Ställen zur Legehennenbodenhaltung ist es auch denkbar das Verfahren in Ställen für die Hähnchenmast einzusetzen. Bei der Hähnchenmast haben die Ställe Längen die in einem Bereich zwischen 50 m und 150 m liegen und eine durchgängig für die Tiere betretbare Breite der Stallgrundfläche liegt in einem Bereich von 10 m bis 30 m. Entsprechend können ein oder mehrere Förderbänder verwendet werden, um die nutzbare Stallgrundfläche großflächig auszulegen.

Die Oberseite des Förderbandes bietet im ausgelegten Zustand auf dem (Beton-)Boden eine Aufstandsfläche für die Tiere und ist somit als nutzbare Stallgrundfläche zu sehen. Der ausgelegte Zustand wird für mindestens 80%, insbesondere mindestens 90% der Wochenzeit eingenommen. In der Zeit, in der das Förderband ausgelegt ist, wird Kot auf das Förderband von den Tieren gescharrt und sammelt sich an. Beim Abmisten kann es einen konstanten Austrag des Kots über die gesamte Länge des Förderbandes geben, was für die Planung des Abtransportes besonders vorteilhaft ist.

Die Kotfördervorrichtung kann wie oben beschrieben ausgebildet sein.

Nachfolgend wird ein Ausführungsbeispiel der vorliegenden Erfindung anhand der Zeichnung näher beschrieben. Gleiche Bauteile oder Bauteile mit gleichen Funktionen tragen gleiche Bezugszeichen. Es zeigen:
- Figur 1:: eine räumliche Darstellung einer Kotfördervorrichtung,
- Figur 2:: eine räumliche Darstellung der Kotfördervorrichtung der Figur 1 ohne Darstellung des Antriebs und der seitlichen Abdeckung,
- Figur 3:: eine räumliche Darstellung einer weiteren Kotfördervorrichtung,
- Figur 4:: eine Detailansicht des eingespannten Förderbandes der Kotfördervorrichtung der Figur 3,
- Figur 5:: eine Detailansicht des Antriebs der Kotfördervorrichtung der Figuren 3 und 4,
- Figur 6:: eine räumliche Teilansicht einer weiteren Kotfördervorrichtung,
- Figur 7:: eine Draufsicht auf einen Teil der Kotfördervorrichtung der Figur 6,
- Figur 8:: eine Seitenansicht eines Stalls zur Legehennenhaltung, sowie
- Figur 9:: eine Draufsicht auf den Stall der Figur 8.

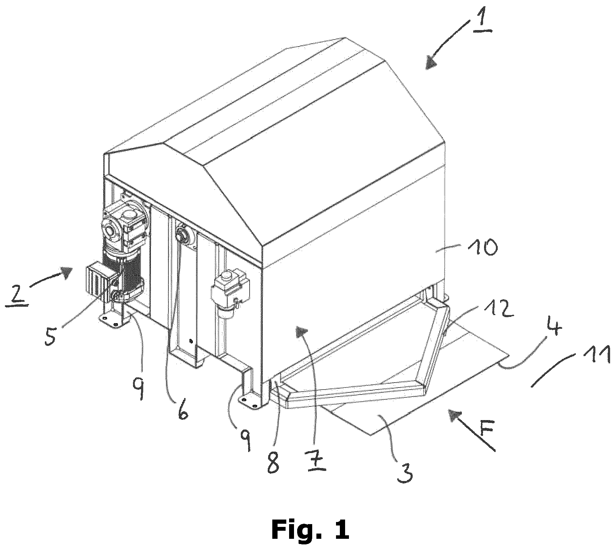

In der Figur 1 ist eine Kotfördervorrichtung 1 räumlich abgebildet, die einen Antrieb 2 aufweist, der eine nicht ersichtliche Antriebstrommel antreibt, auf die ein Förderband 3 aufgerollt ist. Ein Ende des Förderbandes 3 ist fest mit der Antriebstrommel befestigt und das andere Ende 4 liegt frei. Der Antrieb 2 umfasst einen Elektromotor 5. Die Antriebstrommel weist eine Welle 6 auf, die drehbar in einem Gehäuse 7 gelagert ist. Das Gehäuse 7 umschließt die Antriebstrommel an allen Seiten und weist lediglich an der Unterseite einen Durchgang 8 für das Förderband 3 auf. So kann verhindert werden, dass Dreck in das Gehäuse 7 gelangt und die Vorrichtung 1 beschädigt wird. Die Unterseite des Gehäuses 7 weist zudem durchsetzende, quer zur Förderrichtung laufende Ausnehmungen 9 auf, die den Öffnungen von Standardpaletten, insbesondere Euro-Paletten entsprechen, so dass das Gehäuse 7 und damit die gesamte Kotfördervorrichtung 1 einfach mit einem Gabelstapler bzw. von Gabelzinken aufgenommen und transportiert werden kann.

An dem Gehäuse 7 ist an einer Vorderseite 10, knapp über der Bodenaufstandsfläche 11 eine Abstreifvorrichtung 12 angebracht, die als v-förmige Abstreiferleiste ausgebildete ist und entgegengesetzt zur Aufrollrichtung F spitz zuläuft. Die Spitze liegt dabei in etwa mittig des Förderbandes 3.

Ställe zur Bodenhaltung von Legehennen weisen parallel verlaufende Stallgänge auf, zwischen denen Volieren angeordnet sind. Die Stallgänge können jeweils bis zu 150 m lang sein.

Die zuvor beschriebene Kotfördervorrichtung wird bevorzugt am Ende eines Stallganges aufgestellt und das Förderband ausgezogen und in den Stallgang oder unter die Volieren gelegt. Das Förderband weist somit bevorzugt eine Länge auf, die mindestens der Länge des Stallganges (freizugängig für die Tiere) entspricht.

Zum Ausziehen ist der Antrieb im Freilauf. Das Förderband kann händisch ausgezogen werden oder mit Hilfe einer externen Zugvorrichtung, die das freie Ende aufnimmt und entlang des Stallganges zieht.

Nachdem das Förderband ausgezogen ist, bedeckt es großflächig die Betonbodenfläche, auf der die Legehennen laufen und scharren.

Nach einer vorgegebenen Zeit oder nach Bedarf, wenn ein Abmisten erfolgen soll, wird der Antrieb betätigt und das Förderband aufgerollt. Der auf dem Förderband befindliche Kot wird durch das Aufrollen des Förderbandes gegen die Abstreiferleiste geschoben und wandert an der v-förmigen Kante nach außen, bis es vom Förderband seitlich runterfällt und von der Förderbandoberfläche abgestriffen wird. Unterhalb des Förderbandes im Bereich der Abstreiferleiste kann eine Grube zum Sammeln des Kotes vorhanden sein oder ein Querförderband, dass quer zu den Stallgängen an deren Ende verläuft und den Kot aus dem Stall heraus in eine Grube abführt.

Es ist auch denkbar, dass zusätzlich Kot von der nicht abgedeckten Bodenfläche auf das Förderband geschoben wird. Dies kann händisch mit einem Besen, Schieber oder anderem Hilfsmittel oder automatisiert erfolgen.

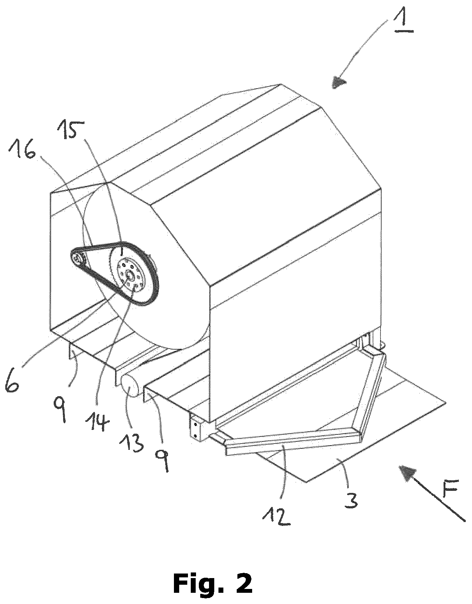

In der Figur 2 ist das Innere der Kotfördervorrichtung 1 dargestellt. Das Förderband 3 läuft unter der Abstreiferleiste 12 und unterhalb einer Umlenkrolle 13 entlang. Die Umlenkrolle 13 liegt unter der Welle 6 und ist in Draufsicht von dieser verdeckt. An der Umlenkrolle 13 wird das Förderband entgegen der Aufrollrichtung F zur Antriebstrommel 14 geführt und mittels des Antriebs in Aufrollrichtung F aufgewickelt. Die Umlenkrolle 13 kann zwischen den Ausnehmungen 9 für den Transport mittels Gabelstapler liegen. Auf der Welle 6 sitzt eine Riemenscheibe 15, die mit einem Riemen 16 eines Riementriebs zusammenwirkt.

In einer weiteren nicht dargestellten Ausführungsform ist das freie Ende an einer zweiten Antriebstrommel zum Aufwickeln in die entgegengesetzte Richtung befestigt. Der zweiten Antriebstrommel ist ein zweiter Antrieb zugeordnet, der das Förderband in die entgegengesetzte Richtung aufwickelt. Der zweite Antrieb ist analog zum zuvor beschrieben Antrieb ausgebildet. Das Förderband kann mittels der beiden Antriebe im Stall hin und her bewegt werden. Dazu wird das Förderband von einer Antriebstrommel abgewickelt und auf die zweite Antriebstrommel aufgewickelt und vice versa. Ein händisches oder maschinelles Ausziehen mit einer Zugvorrichtung entfällt. Wenn beiden Enden eines Stallganges jeweils ein Querförderband zugeordnet ist, ist es vorteilhaft, wenn an beiden Gehäusen jeweils eine Abstreiferleiste befestigt ist.

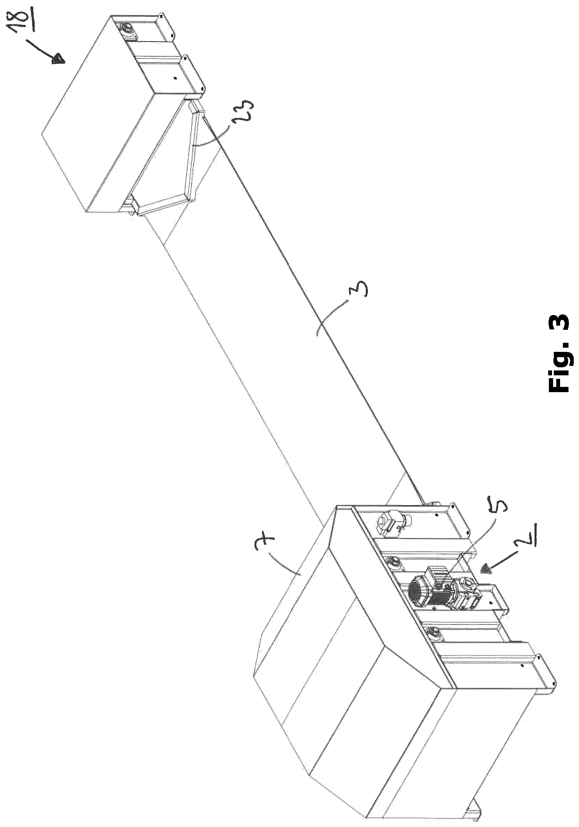

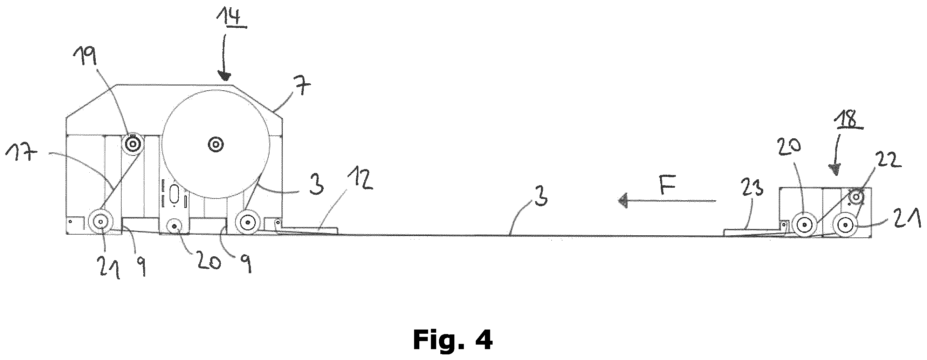

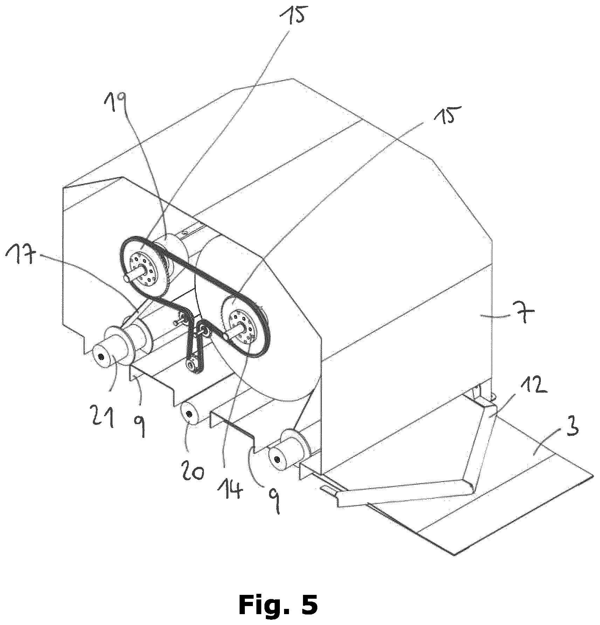

Eine weitere Ausführungsform ist in den Figuren 3 bis 5 dargestellt. An dem zweiten Ende des Förderbandes 3 ist ein Riemen 17 befestigt, der in einer Umlenkvorrichtung 18 zurückgelenkt wird und unterhalb des Förderbandes 3 in dem Stall verläuft. Das andere Ende des Riemens 17 wird auf einer zweiten Antriebstrommel 19 auf- und abgewickelt. Es ist aber auch denkbar, dass das Förderband 3 zurückgeführt wird und entsprechend länger ausgebildet ist. Der Vorteil bei dem Einsatz eines Riemens 17 ist der geringere Verschleiß und die niedrigeren Kosten.

Die Umlenkvorrichtung 18 weist zwei Führungsrollen 20,21 mit seitlichen Führungsscheiben auf. Das Förderband 3 bzw. der Riemen 17 verlaufen unterhalb einer ersten Führungsrolle 20 zu einer Umlenktrommel 22, die oberhalb der ersten Führungsrolle 20 und nach hinten versetzt liegt. Von der Umlenktrommel 22 aus verläuft das Förderband 3 bzw. der Riemen 17 zu der zweiten Führungsrolle 21 und unterhalb dieser zurück zum Antrieb 2.

Wenn das Förderband 3 vollständig von der ersten Antriebstrommel 14 abgerollt ist, liegt das zweite Ende des Förderbandes 3 in der Umlenkvorrichtung 18, bevorzugt im Bereich der Umlenktrommel 22. Der Riemen 17 verläuft unterhalb des Förderbandes 3 und ist maximal aufgewickelt auf die zweite Antriebstrommel 19. Wenn das Förderband 3 vollständig aufgerollt ist, liegt im Stall der hin und herlaufende Riemen 17 und das zweite Ende des Förderbandes befindet sich kurz vor der Abscheidevorrichtung 12 des Gehäuses 7 des Antriebs 2. Der Riemen 17 ist maximal von der zweiten Antriebstrommel 19 abgerollt. Im Gehäuse 7 des Antriebs 2 ist der Riemen 17 mittels einer zwischen den Ausnehmungen 9 für die Gabelstaplerzinken befindlichen Rolle 20 zu einer Führungsrolle 21 geführt, die zwei Führungsscheiben trägt, die die Position des Riemens 17 auf der Rolle 21 definieren. Von der Führungsrolle 21 aus verläuft der Riemen 17 zur zweiten Antriebstrommel 19, mit der das Riemenende fest verbunden ist. Der Riemen bzw. das Zugmittel und das mit dem Riemen verbundene Förderband werden in der Gesamtheit als Fördermittel bezeichnet.

Es ist bevorzugt ein einziger Elektromotor 5 zum Antreiben beider Antriebstrommeln 14, 19 vorgesehen. Der Riemen 17 des Riementriebs greift in jeweils eine auf der Welle der Antriebstrommel sitzende Riemenscheibe 15 (Zahnrad) ein. Den Antriebstrommeln 14, 19 ist eine Kupplung zugeordnet, so dass der eine Elektromotor 5 das Förderband 3 auf die erste Antriebstrommel 14 aufrollt und dabei der Riemen 17 von der zweiten Antriebstrommel 19 abgerollt werden kann und vice versa. Anstelle des Riemens kann auch ein anderes Zugmittel, beispielsweise ein Seil, Kette oder dergleichen verwendet werden. Es kann auch vorteilhaft sein, wenn zwei parallellaufende Riemen verwendet werden. Riemen sind die bevorzugte Zugmittelwahl, da der Verschleiß des Förderbandes beim Abmisten, wenn das Zugmittel unterhalb des Förderbandes läuft besonders gering ist.

Um Verschmutzungen in der Umlenkvorrichtung zu verhindern, ist eine zweite Abstreifvorrichtung 23 vorgesehen, die in Aufrollrichtung F des Förderbandes 2 vor der ersten Führungsrolle 20 liegt. Die Abstreifvorrichtung 23 ist als v-förmige Abstreiferleiste und in Aufrollrichtung F spitz zulaufend ausgebildet. Die Spitze liegt dabei in etwa mittig des Förderbandes 3.

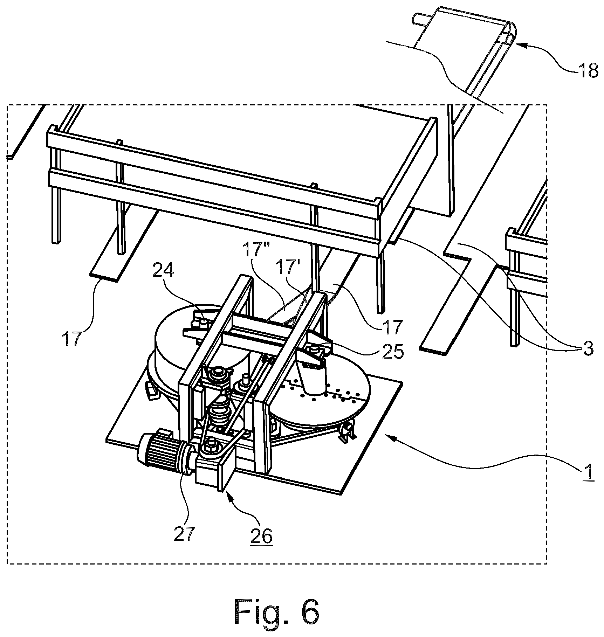

In der Figur 6 ist eine weitere Ausführungsform einer Kotfördervorrichtung 1 dargestellt. An den Enden des Förderbandes 3 ist jeweils ein Riemen 17 als Zugmittel befestigt. Die beiden Riemen 17 sind jeweils auf eine Antriebstrommel 24,25 auf- und abwickelbar. Die beiden Antriebstrommeln 24,25 werden mittels eines einzigen Antriebs 26 angetrieben. Eine Kupplung ermöglicht, dass der eine Elektromotor 27 einen ersten Riemen 17' auf eine erste Antriebstrommel 25 aufrollt und dabei der zweite Riemen 17" von der zweiten Antriebstrommel 24 abgerollt werden kann und vice versa. Damit die Antriebsvorrichtung möglichst kompakt ausgebildet sein kann, werden die Riemen 17 mittels Führungsrollen aufgestellt und hochkant aufgewickelt (nicht dargestellt). Die Figur 6 zeigt das Aufrichten des Riemens nicht und ist ungenau bei der Darstellung des Übergangs. Die Drehachse der Antriebstrommeln 24,25 ist vertikal ausgerichtet. Das Förderband 3 bzw. der Riemen 17 läuft um eine rein schematisch dargestellte Umlenkvorrichtung 18 um. Das Förderband 3 ist derart dimensioniert, dass es einen Teil der Bodenfläche über die Stallganglänge auslegt. In der Figur 6 liegt das Förderband 3 unterhalb der Voliere. Es sind zwei weitere Fördermittel mit Förderband 3 bzw. Riemen 17 dargestellt, die aber Teil von anderen nicht abgebildeten Kotfördervorrichtungen sind.

Damit das Förderband 3 beim Abmisten nahezu vollständig um die Umlenkvorrichtung 18 umlaufen kann, sind die beiden Riemen 17 entsprechend lang ausgebildet. Das Abmisten kann erfolgen, in dem eine Abstreifvorrichtung, wie vorstehend beschrieben, vor der Antriebseinheit angeordnet ist und der Kot von dort in eine Grube auf ein Querförderband fällt (nicht dargestellt). Es ist aber auch denkbar, auf eine Abstreifvorrichtung auf der Oberseite zu verzichten und die Umlenkvorrichtung vor (bzw. leicht überragend) eine Grube und/oder ein Querförderband zu stellen, so dass beim Umlaufen des Förderbandes der Kot von der Oberseite auf das Querförderband herunterfällt. Im Bereich der Umlenktrommel kann eine Abstreifvorrichtung vorgesehen sein, die verhindert, dass Kot auf der Tragseite des Förderbandes verbleibt und mit dem Förderband durch den Stall gezogen wird. Beim Abmisten liegt das Förderband zum Teil doppelt und die Tragseite (Oberseite) ist teilweise der Bodenfläche des Stalls zugewandt. Nach dem Abmisten, wenn das Förderband zumindest zu einem Großteil, bevorzugt vollständig umgelaufen ist, wird das Förderband in die entgegengesetzte Richtung wieder in den Stall mit der Tragseite nach oben zeigend ausgelegt. Vorzugsweise ist die Länge des Förderbandes geringer als der Abstand zwischen der Antriebseinheit 26 mit den Antriebstrommeln 24,25 und der Umlenkvorrichtung 18.

Alle Ausführungsformen haben gemeinsam, dass die Oberseite des Förderbandes eine Aufstands- bzw. Bodenfläche für die Tiere ausbildet bzw. als nutzbare Stallgrundfläche zur Verfügung steht. In anderen Worten liegt das Förderband auf dem Betonboden des Stalls und die Tiere stehen unmittelbar auf dem Förderband. Das Förderband bedeckt eine große Fläche der Bodenaufstandsfläche und dies für mindestens 90%, bevorzugt 95% der Zeit einer Woche. Zum Abmisten wird das Förderband bewegt und dabei kommt bereichsweise die Oberseite des Förderbandes mit der Unterseite des Förderbandes in Anlage und das Förderband wird großflächig aneinander gerieben. Das Förderband liegt im vollständig ausgelegten Zustand bevorzugt einfach (also nicht doppelt übereinander). Das Abmisten erfolgt bevorzugt mit durchgängigem bevorzugt im Wesentlichen konstantem Austrag von Kot auf ein Querförderband.

Das Förderband 3 der Kotfördervorrichtung ist bevorzugt ein PVC Förderband. Alternativ kann das Förderband auch aus PU, Silikon, PE oder Gummi sein. Das Förderband weist bevorzugt mindestens eine Gewebelage auf. Die Gewebelage kann laufseitig angeordnet sein. Es ist aber auch möglich, dass die Unterseite mit dem Kunststoff beschichtet ist. Der Kot des Geflügels haftet nur schlecht an derartigen Kunststoff-Förderbändern und lässt sich besonders einfach abstreifen.

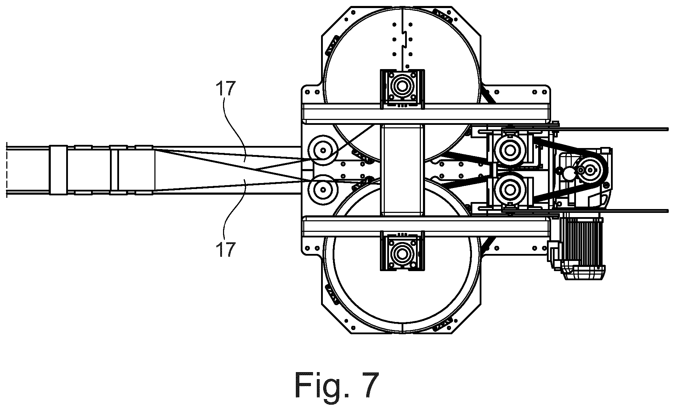

Aus der Figur 7 ist das Aufrichten der Riemen 17 ersichtlich. Die beiden gegenläufigen Riemen 17 liegen in der dargestellten Ausführungsform übereinander bzw. unmittelbar aufeinander und werden zum Auf- und Abrollen aufgerichtet. Das Aufrichten ermöglicht, die Vorrichtung besonders kompakt zu halten.

Es ist auch denkbar, zwei Zugmittel pro Förderbandende vorzusehen und diese seitlich des Förderbandes anzuordnen, so dass das Förderband nicht über oder unter den Zugmitteln laufen muss, sondern diese stets seitlich mit einem Abstand zum Förderband liegen. Eine solche Anordnung kann ganz allgemein für die vorstehenden Ausführungsformen verwendet werden, da dadurch der Verschleiß des Förderbandes gering gehalten werden kann.

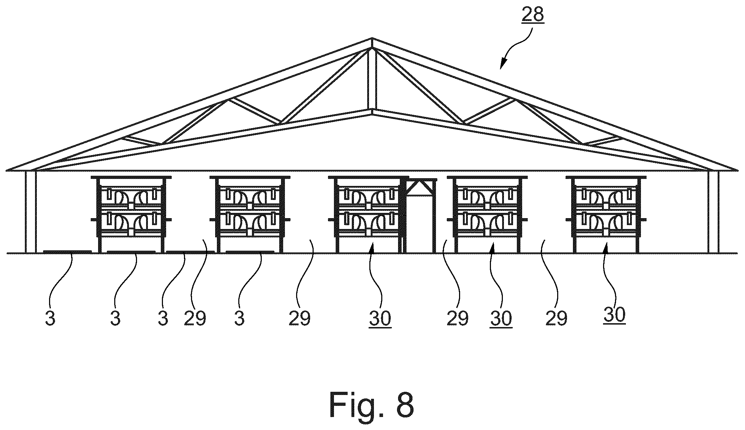

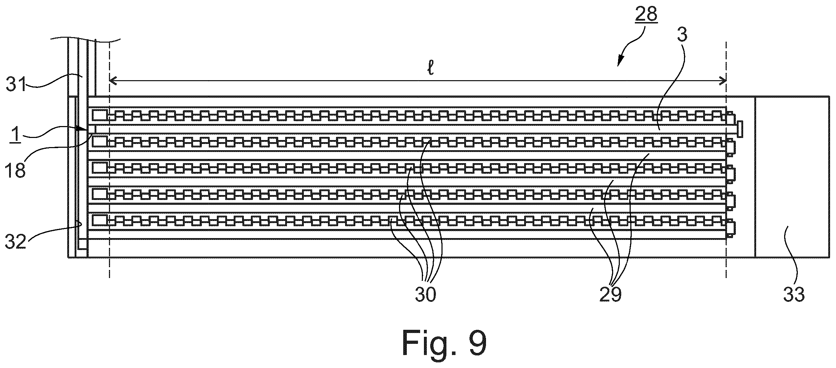

In den Figuren 8 und 9 ist ein Stall 28 zur Legehennenhaltung dargestellt. Der Stall 28 weist parallellaufende Stallgänge 29 auf, zwischen denen Volieren 30 mit nicht dargestellten Legenestern angeordnet sind. Die Volieren sind aufgeständert und weisen mehrere Ebenen auf. Die Betonbodenfläche des Stalls bzw. die nutzbare Stallgrundfläche zur Tierhaltung ist somit unterhalb der Volieren und in den Stallgängen gegeben und steht als Scharraum für die Legehennen zur Verfügung. Das Förderband 3 einer Kotfördervorrichtung kann in einem Stallgang 29 ausgelegt sein und/oder unterhalb der Volieren 30. In Figur 9 ist exemplarisch die Anordnung in einem Stallgang dargestellt. Vorzugsweise wird jeder Stallgang und/oder jede Fläche unterhalb der Volieren mit Förderband ausgelegt. Das Förderband 3 erstreckt sich im vollständig ausgelegten Zustand vorzugsweise über die gesamte Stallganglänge I, insbesondere über mindestens 90% der Stallganglänge. Die Stallganglänge ist in Figur 9 verdeutlicht und ist durch die Länge der nutzbaren Stallgrundfläche, die für die Tiere zugänglich ist definiert.

Den Stallgängen 29 ist an einem Ende ein Querförderband 31 zugeordnet, das quer zum Stall verläuft und in einer Grube 32 liegen kann (siehe Figur 9). Dem anderen Ende der Stallgänge ist ein Eiersammelraum 33 zugeordnet. Das Querförderband 31 läuft aus dem Stall nach draußen und transportiert den Kot somit aus dem Stall heraus.

Das Querförderband 31 nimmt auch den Kot von den Abmisteinrichtung auf, die in den Volieren unterhalb der Gitter angeordnet sind und umlaufend ausgebildet sind (nicht dargestellt).

Die Antriebseinheit der Kotfördervorrichtung 1 kann auf der Seite des Querförderbandes bzw. der Grube, wie vorstehend erläutert mit einer Abscheidevorrichtung angeordnet sein. In dem Fall liegt die Antriebseinheit auf der den Volieren abgewandten Seite der Grube. In anderen Worten läuft das Förderband über die Grube hinweg (nicht dargestellt). Es ist aber auch denkbar, dass für den Fall, dass eine Umlenkvorrichtung 18 verwendet wird, diese an dem Ende des Stalls mit dem Querförderband 31 steht. Da der Kot beim Umlenken von dem Förderband 3 herunterfällt, steht die Umlenkvorrichtung auf der volierennahen Seite der Grube bzw. des Querförderbandes und kann die Grube teilweise überragen. Der Antrieb ist dem eiersammelraumnahen Ende des Stallganges zugeordnet.

Wie in Figur 9 dargestellt, liegen sowohl die Umlenkvorrichtung als auch die Antriebseinheit mit Antrieb und Antriebstrommeln außerhalb der nutzbaren Stallgrundfläche bzw. sind nicht von den Tieren zugänglich.

Das Verfahren eignet sich auch zum Abmisten von Hähnchenmastställen, die großflächig von wenigstens einem Förderband ausgelegt werden.

## Patentansprüche

1. Kotfördervorrichtung (1) mit einem Fördermittel (3) aufweisend ein Förderband zur Aufnahme von Kot und wenigstens einem Antrieb (2), der dazu eingerichtet ist, das Fördermittel (3) zu bewegen, **dadurch gekennzeichnet, dass** ein Ende des Fördermittels (3) fest mit einer rotatorisch antreibbaren Antriebstrommel (14) verbunden ist, wobei die Kotfördervorrichtung (1) eingerichtet ist, auf dem Förderband (3) befindlichen Kot beim Aufwickeln des Fördermittels (3) auf die Antriebstrommel abzutragen.

2. Kotfördervorrichtung nach Anspruch 1, **dadurch gekennzeichnet, dass** das Förderband (3) zumindest teilweise aus Kunststoff gebildet ist.

3. Kotfördervorrichtung nach Anspruch 1 oder 2, **dadurch gekennzeichnet, dass** das Förderband (3) eine Länge von 50 m bis 310 m und/oder eine Breite von 0,5 m bis 3,5 m aufweist.

4. Kotfördervorrichtung nach einem der vorhergehenden Ansprüche, **dadurch gekennzeichnet, dass** ein zweites Ende (4) des Fördermittels (3) fest mit einer rotatorisch antreibbaren zweiten Antriebstrommel verbunden ist, wobei die Kotfördervorrichtung (1) weiterhin eine Umlenkeinrichtung umfasst, um die das Fördermittel umläuft.

5. Kotfördervorrichtung nach Anspruch 4, **dadurch gekennzeichnet, dass** ein einziger Antrieb (2) vorhanden ist, der wahlweise die eine oder andere Antriebstrommel antreibt.

6. Kotfördervorrichtung nach einem der vorhergehenden Ansprüche, **dadurch gekennzeichnet, dass** wenigstens ein Ende (4) des Förderbandes (2) mit einem Zugmittel (17) verbunden ist und das Zugmittel mit einer Antriebstrommel (19) fest verbunden ist.

7. Kotfördervorrichtung nach einem der vorhergehenden Ansprüche 4 bis 6, **dadurch gekennzeichnet, dass** die beiden Antriebstrommeln in unmittelbarer Nähe zueinander liegen und der Abstand zur Umlenkeinrichtung in einem Bereich zwischen 50 m bis 310 m liegt.

8. Verwendung einer Kotfördervorrichtung nach einem der vorhergehenden Ansprüche, zum zumindest teilweisen Auslegen einer Bodenfläche zur Tierhaltung mit dem Förderband (3) und Abmisten der Bodenfläche.

9. Verwendung nach Anspruch 8, **dadurch gekennzeichnet, dass** die Bodenfläche zur Legehennenbodenhaltung verwendet wird und das Förderband eine nutzbare Stallgrundfläche für die Legehennen ist.

10. Stall zur Legehennenbodenhaltung mit parallel verlaufenden Stallgängen und dazwischen angeordneten Volieren, wobei die Bodenfläche als Scharrraum für die Legehennen eingerichtet ist, aufweisend wenigstens eine Kotfördervorrichtung (1) nach einem der vorhergehenden Ansprüche 1 bis 7.

11. Stall nach Anspruch 10, **dadurch gekennzeichnet, dass** der Stall quer zu den Stallgängen ein Querförderband aufweist und wenigstens eine Kotfördervorrichtung (1), die in einem vollständig ausgelegten Zustand einen Teil der Bodenfläche mit dem Förderband bedeckt und die dazu ausgelegt ist, beim Abmisten Kot von dem Förderband auf die Transportseite des Querförderbandes abzutragen.

12. Verfahren zum Abmisten von Kot aus einem Stall mit den folgenden Schritten:
- Vorsehen einer Kotfördervorrichtung mit einem Fördermittel aufweisend ein Förderband,
- Auslegen zumindest eines Teils einer Bodenfläche des Stalls mit dem Förderband,
- Sammeln von Kot auf dem Förderband als Aufstandsfläche für in dem Stall gehaltene Tiere und
- Abmisten des Kotes durch Fördern des Kotes mittels des Förderbandes.
